(19) Europäisches Patentamt / European Patent Office / Office européen des brevets

(11) **EP 3 011 836 A1**

(12) **EUROPEAN PATENT APPLICATION**

(43) Date of publication:
**27.04.2016 Bulletin 2016/17**

(51) Int Cl.:
*A23D 9/00* (2006.01)     *A23L 29/20* (2016.01)
*A23D 9/02* (2006.01)     *A23D 9/007* (2006.01)
*A23L 29/281* (2016.01)

(21) Application number: **14189570.6**

(22) Date of filing: **20.10.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Stichting Top Institute Food and
Nutrition
6709 PA Wageningen (NL)**

(72) Inventors:
• **Scholten, Elke**
  **6700 AN Wageningen (NL)**
• **de Vries, Auke**
  **6700 AN Wageningen (NL)**

(74) Representative: **Ellens, Andries**
  **Ellens & van Essen**
  **Agro Business Park 20**
  **6708 PW Wageningen (NL)**

(54) **Protein-stabilised oleogels**

(57)     The invention provides a method for the production of an oleogel comprising a protein and an oil, the method comprising:
(i) providing a water protein composition, wherein the composition comprises protein and water and 0-10 wt.% of one or more other components, and wherein the protein comprises a globular protein;
(ii) exchanging in a solvent exchange process at least part of the water by an oil, wherein an intermediate solvent is applied wherein water is solvable; and
(iii) providing said oleogel, wherein the oleogel comprises 0.5-30 wt.% of said protein, 70-99.5 wt.% of said oil, and 0-10 wt.% of said one or more other components.

EP 3 011 836 A1

**Description**

FIELD OF THE INVENTION

The invention relates to a method for the production of an oleogel. The invention further relates to an oleogel obtainable with such method, as well as (food) products comprising such oleogel and/or based upon such oleogel.

BACKGROUND OF THE INVENTION

Oleogels, for instance for use in food products, are known in the art. WO2014004018, for instance, describes a method of preparing an edible oleogel comprising combining an edible triacylglycerol oil or triacylglycerol fat and ethyl cellulose in a weight ratio from 99:1 to 80:20 to form a mixture, and heating and agitating the mixture at a temperature within the range from 80 to 300 °C to form an oleogel, wherein the heating and agitating is conducted under an inert atmosphere; an oleogel obtainable by said method, its use to prepare food products and to food products comprising said oleogel.

SUMMARY OF THE INVENTION

As WO2014004018 also indicates, structure in solid fat-containing food products is provided by the network of crystalline triacylglycerols. However, these triacylglycerols contain high levels of saturated fatty acids. Instead of using naturally highly saturated solid fats, oils comprising triacylglycerols having high levels of unsaturated fatty acids are also transformed to more solid products by hydrogenation or partial hydrogenation. "Trans fats" which are unsaturated fats with trans-isomer unavoidably emerge as a by-product from partial hydrogenation of unsaturated oils into saturated fats. Research into the role fats and oils play in human health has indicated that consumption of saturated fatty acids, even more of trans fatty acids is associated with elevated cholesterol levels and cardiovascular diseases. Therefore, it is desirable to develop healthier alternatives to triacylglycerols containing saturated or partially hydrogenated fatty acids. WO2014004018 teaches a process for making an oleogel including heating and agitating under an inert atmosphere such as under an inert gas atmosphere or in ambient air under vacuum (reduced pressure), which may complicate such process for making an oleogel.

Hence, it is an aspect of the invention to provide an alternative method for the production of an (oleo)gel, which preferably further at least partly obviates one or more of above-described drawbacks. Yet, it is also an aspect of the invention to provide an alternative (oleo)gel, which preferably further at least partly obviates one or more of above-described drawbacks.

In a first aspect, the invention provides a method for the production of an oleogel comprising a protein and an oil, the method comprising: (i) providing a water-protein composition, wherein the composition comprises protein, water, and optionally one or more other components (especially wherein the water protein composition comprises 0.5-30 wt.% protein and 70-99.5 wt.% water and 0-10 wt.% of one or more other components), and wherein the protein especially comprises a globular protein; (ii) exchanging in a solvent exchange process at least part of the water by a lipid material comprising an oil, wherein in a specific embodiment the oil is a vegetable oil, wherein an intermediate solvent is applied wherein water is solvable (and wherein the oil is solvable); and (iii) providing said oleogel. It surprisingly appears that with substantially only proteins and oil an oleogel can be obtained, starting from a hydrogel or protein aggregates (see also below). Hence, with the present method an oleogel can be obtained based on food safe ingredients, which can replace fat and may therewith be healthier than the same product but based on fat. Further, with the present method no additional surfactants are necessary and no severe heat treatment (oxidation) may have to take place. Also, with the present method an oleogel can be obtained that can be used for cosmetics or (other) personal care products, but also e.g. for drug delivery (e.g. a pharmaceutical product), etc. The oleogel thus provided can be a GRAS (Generally Recognized As Safe) material. Further the oleogel can be used as biocompatible oleogel. Though proteins appear to have gelation and water holding capacities in aqueous systems, it is now also found that proteins may have these properties in oil-continuous (apolar) systems. In this invention, we use a solvent exchange process to provide an oleogel wherein proteins also have gelation and oil holding capacities for oil-continuous gels (apolar phase).

The term "lipid material comprising an oil" and similar terms especially refers to fats and oil, wherein the former at least includes a portion of oil. The term oil refers to a lipid that is liquid at room temperature, especially at the place of making the oleogel. For the sake of simplicity, each lipid that is liquid at 20 °C is at least considered to be an oil. Herein, the term lipid especially refer to triglycerides. Hence, the term "lipid material comprising an oil" especially refers to triglyceride material comprising an oil. The oil content is especially at least 20 wt.%, even more especially at least 30 wt.%, such as at least 40 wt.%, even more especially at least 50 wt.%, such as at least 60 wt.% or even at least 70 wt.%.

Hence, in a further aspect the invention also provides an oleogel obtainable with such method. The invention especially provides in an embodiment an oleogel comprising 0.5-30 wt.% protein, 70-99.5 wt.% lipid material comprising (vegetable) oil, and 0-10 wt.% of one or more other components (all weight percentages on a dry weight basis). The oleogel may be part of a food product or a non-food product (both are herein indicated as "product"). For instance, it may be integrated or embedded in such products, or even may substantially for such food product or non-food product. Hence, in a further aspect the invention also provides a food product and/or a non-food product comprising an oleogel phase as defined herein. The term "phase" or "oleogel phase" indicates that the (food) product includes a region (or phase) with said oleogel. The food or non-food product, i.e. "product", may include next to the oleogel, as obtainable with the herein described method, also other components. For instance, when combining the oleogel with water, a water comprising oleogel may be obtained, comprising up to e.g. 70 wt.% water (see also above). For instance, the oil to water ratio in the oleogel based product may for instance be in the range of 20:80 to 40:60. Hence, in an embodiment a product is provided comprising the herein described oleogel and water. In yet a further embodiment, the product may include oleogel and one or more of the above indicated other components. Alternatively or additionally, the product may include a pharmaceutical (drug), with e.g. the pharmaceutical being embedded in the oleogel.

BRIEF DESCRIPTION OF THE DRAWINGS

Embodiments of the invention will now be described, by way of example only, with reference to the accompanying schematic drawings in which corresponding reference symbols indicate corresponding parts, and in which:

Fig 1: Images of oleogels prepared at different volumes. A: WPI (whey protein isolate) macrogel with a volume > 1 $cm^3$, B: oleogels with a volume of roughly 1 $mm^3$, C: oleogel paste consisting of oleogels of 1-1000 $\mu m^3$, D: oleogel paste consisting of protein aggregates;

Fig. 2: microscopy images (SEM and CLSM) of the different types of oleogels. A:Cryo-SEM pictures of a WPI macrogel (macro WPI oleogel, 91% oil), B: CLSM images of $\pm$ 1 $\mu m^3$ particles (macro-sized WPI particles suspended in oil after solvent exchange. Stains used are FITC and Nile Red. Protein particles appear as bright spots), C: CLSM images of an oleogel paste consisting of protein aggregates WPI aggregates ~ 250 nm suspended in oil imaged by CLSM after solvent exchange. Stain used: Rhodamine. Protein aggregates appear as bright spots);

Fig. 3: Light microscope pictures of WPI aggregates prepared by heat treatment at 4 wt.% protein at pH 5.7 in water, dispersed in sunflower oil prepared using acetone drying (Fig. 3a) or short solvent exchange procedure (Fig. 3b). The bar indicates a length scale of 50 $\mu m$;

Fig. 4: Solvent exchange steps, from water to acetone to oil; ten stages I-X are schematically depicted:

I: 70% demi water and 30% acetone; on the bottom a hydrogel;
II 50 % demi water and 50% acetone;
III 30% demi water and 70% acetone;
IV 100% acetone;
V 100% acetone;
VI 30% oil and 70 % acetone;
VII 50% oil and 50 % acetone;
VIII 70% oil and 30 % acetone;
IX 100% oil;
X 100% oil; on the bottom oleogel;

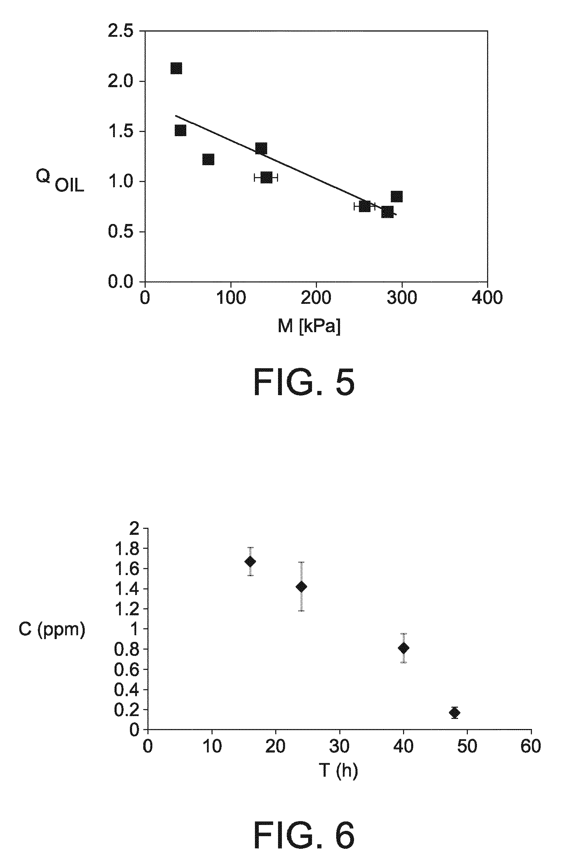

Fig. 5: Oil binding capacity as a function of the gel strength of the WPI gel (x-axis Modulus (M) in kPa);
Fig. 6: Acetone concentration as a function of drying time (at RT) (x-axis time (t) in hours (h); y-axis concentration (c) acetone in ppm;

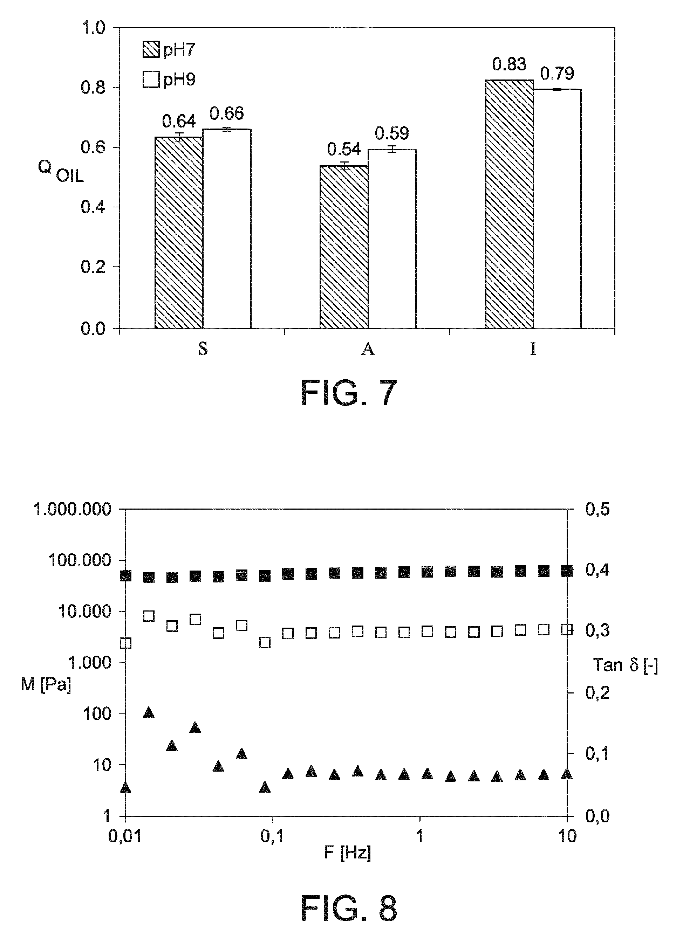

Fig. 7: Oil loading ($Q_{oil}$) for 10% WPI gels at pH 7 and 9; S indicates a standard, A indicates albumin and I indicates immunogel; and
Fig. 8: Frequency sweep of the oleogel prepared with protein aggregates (WPI). Filled squares: G', open squares: G", triangles: tan$\delta$; on the x-axis the frequency (f) in herz (hz) is inidcated and on the left y-axis the modulus (M) in Pascal (Pa).

The schematic drawings are not necessarily on scale.

DETAILED DESCRIPTION OF THE EMBODIMENTS

The term "oleogel" is known in the art and refers to a gel having an oil as a continuous phase. The percolation structure (in this invention) is based on the proteins. Hence, in the absence of gelling agents or surfactants that are necessary in the art to create oleogels herein the oleogel is substantially based on oil and protein, with the latter forming the percolating structure. This structure can e.g. be seen with SEM (scanning electron microscopy) or CLSM (confocal laser scanning microscopy). The oleogel may essentially consists of protein and oil or a lipid material based on oil (see also below).

The oil, or other lipid based material, may comprise any oil, but may for food applications especially be selected from vegetable oils, such as one or more selected from the group consisting of coconut oil, corn oil, cottonseed oil, flax seed oil, linseed oil, olive oil, palm oil, peanut oil, safflower oil, soybean oil, sunflower oil, etc. Additionally or alternatively, the oil may include one or more of grape seed oil, sesame oil, argan oil, rice oil, rice brain oil, algal oil, canola oil, maize kern oil, and echium oil. Additionally or alternatively, the oil may include one or more of squid oil and fish oils such as salmon oil and halibut oil. Hence, the term "oil" may also refer to a plurality of different oils. A vegetable oil is a triglyceride extracted from a plant. Optionally, the oil may also be modified, such as by hydrogenation. In a specific embodiment, the (vegetable) oil comprises one or more of sunflower oil and canola oil, etc.. In yet another embodiment, the (vegetable) oil comprises one or more of palm oil and olive oil. In yet another embodiment, paraffin oil may be used as oil. In an embodiment, especially when a macro gel is applied, the oil may be selected from one or more of sunflower oil, canola oil, maize kern oil, rice oil, flax seed oil and olive oil. In yet another embodiment, especially when protein aggregates are applied the oil may be selected from one or more of sunflower oil, maize kern oil, rice oil, flax seed oil and olive oil. Other lipid based materials, other than oil, may refer to semi-solid fats, such as chicken fat, pork fat, or other animal fats.

The protein may comprise any protein. However, especially good results were obtained with globular proteins. Examples of suitable proteins are hemoglobin, immunoglobulin, (bovine serum) albumin, ovalbumin, $\alpha$-lactoglobulin, $\beta$-lactoglobulin, soy protein, etc.. Hence, as source for the protein (see also below), e.g. one or more of pig blood serum albumin, pig blood serum immunoglobulin, hen egg ovalbumin, whey protein isolate, whey protein concentrate, soy protein isolate, soy protein concentrate, etc., may be applied. Other suitable proteins may be derived from one or more of soy (see above), wheat, pea, rice, lupine, potato, canola, etc. Yet other suitable proteins may be derived from e.g. egg white, such as ovalbumin (see above). Using gelatin, a non-globular protein, no oleogel was obtained. The term "protein" may also refer to a plurality of different proteins. In a specific embodiment, the globular protein comprises one or more of whey protein, albumin and immunoglobulin.

The oil and the protein (in the oleogel) may be available in a weight ratio of 100:0.5 - 60:40. The one or more other components in the oleogel may come along with the starting materials (see also below). The one or more other components (in the oleogel) may e.g. comprise one or more of a salt, a sugar, a fat, a fatty acid, an amino acid, a bioactive compound (such as a vitamin), a gelling agent (such as a polysaccharide), and a surfactant. Even more especially, the one or more other components (in the oleogel) may e.g. comprise one or more of a salt, a sugar, a fat, a fatty acid, an amino acid, a vitamin, a gelling agent (such as a polysaccharide), and a surfactant. The bioactive compound may e.g. include one or more of a vitamin, a mineral, an antioxidant, etc. Especially, these one or more other components may be available in the oleogel in amount of 10 wt.% or less (dry weight), especially in amount of 5 wt.% or less (dry weight), such as in amount of 2 wt.% or less, such as 1 wt.% or less (dry weight). Hence, in an embodiment the 0-10 wt.% of one or more other components comprise one or more of a salt, a sugar, a fat, a fatty acid, an amino acid, a vitamin, a bioactive compound, a gelling agent (such as a polysaccharide), and a surfactant.

Especially, the oleogel does *not* (necessarily) include one or more of a surfactant and a (additional) gelling agent, as the percolating structure is formed by the protein without the need of such surfactant or gelling agent. Examples of surfactants include e.g. nonionic, cationic, amphoteric, and polymeric surfactants, etc. Typical gelling agents include natural gums, cellulose, starches, pectins, agar-agar and gelatin. Often they are based on polysaccharides. For instance, in an embodiment the oleogel does not include ethyl cellulose as a gelling agent, or only up to an amount of 0.5 wt.% (dry weight), especially only up to an amount of 0.2 wt.% (dry weight). As indicated above, the one or more other components are not necessarily available.

Water is not considered one or more of the other components. The oleogel, as obtained with the herein described method, may include e.g. up to about 5 wt.% water, such as up to about 3 wt.% water, like up to about 1 wt.% water, relative to the total weight of the oleogel. A water content up to these values may add to the gel strength. The amount of water that may be included in the oleogel may amongst others depend upon the presence of a salt (see also below) in the starting materials. Of course, the oleogel may be applied in water containing systems. In such applications, the oleogel may absorb water and the water content can be much higher. For instance, the total weight of such oleogel may include up to 70% water, i.e. up to 70 wt.% relative to the total weight may be water, the other 30% essentially including lipid (including oil) and protein (see further also below at the (non-) food product comprising the oleogel.

Herein, substantially only the above-mentioned protein is used as gelling agent. In this way, an oil continuous phase is obtained with the protein as gel former. As indicated above, the protein forms a percolating structure in the micrometer range, in which the building blocks are proteins (1-20 nm) or protein aggregates (5-1000 nm) forming either a fine stranded or a course network.

In general, the present oleogel can be made in two ways. One may first create a hydrogel by forming a space spanning network of the proteins and exchange the aqueous phase into an oil phase in a solvent exchange process, thereby providing the oleogel. In an alternative method, one may first create protein aggregates (5-1000 nm) and exchange in a solvent exchange process the aqueous phase for an oil phase, thereby initiating further network formation of the protein aggregates, providing the oleogel.

Hence, the starting composition especially comprises water and protein. The amount of protein may be as high as the solubility of the protein (or proteins), but the amount may even be higher (i.e. over saturated). In general, the (starting) composition may comprise in the order of 0.5-30 wt.% (relative to the total composition, including water), especially in the range of 0.5-15 wt.%, of the protein. Proteins of interested and sources of proteins of interest are indicated above. The amount of water in the starting composition may be in the range of at least 50 wt.%, such as especially 70-99.5 wt.% (relative to the total composition, including the water), even more especially in the range of 80-99 wt.%. Further, as indicated above the starting composition may include other starting components than water and protein, such as one or more of a salt, a sugar, a fat, a fatty acid, an amino acid, a vitamin, a gelling agent, and a surfactant.

As indicated above, in a first embodiment the water protein composition may comprise a hydrogel. Hence, in such embodiment the method includes the formation of the hydrogel based on the starting materials including the protein and water. When using a hydrogel as starting material, especially the water protein composition comprises at least 4 wt.%, such as at least 8 wt.% globular protein, in order to form a space spanning network.

Such hydrogel may have any dimension, from micrometers to centimeters. Especially, in an embodiment the hydrogel may have a volume of at least 0.1 $\mu m^3$, such as especially in the range of 1-1000 $\mu m^3$. Relatively larger hydrogels may have a volumes of at least 1 $mm^3$, such as even at least 1 $cm^3$ (indicated as a "macro gel"). In yet another embodiment, the hydrogel has a volume in the range of 1000 $\mu m^3$ - 1 $mm^3$. Hence, in embodiments the hydrogel has a volume in the range of 1 $\mu m^3$ - 1 $mm^3$, though larger may also be possible (see above).

After the solvent exchange process, such (macro) (hydro)gels also lead to (macro) oleogels. Such (macro) oleogel may be used as such, or may optionally first be processed in smaller oleogel particles. Hence, in an embodiment the oleogel may have a volume of at least 1 $\mu m^3$, such as in the range of 1-1000 $mm^3$, or even larger than 1 $cm^3$ (and subsequently be processed into smaller oleogel particles). In yet another embodiment, the oleogel has a volume in the range of 1000 $\mu m^3$ - 1 $mm^3$. Hence, in embodiments the oleogel has a volume in the range of 1 $\mu m^3$ - 1 $mm^3$, though larger may also be possible (see above).

The solvent exchange process is further elucidated below.

Further, as indicated above in a second embodiment protein aggregates are used. Hence, in a further embodiment the water protein composition comprises protein aggregates. When using protein aggregates as starting material, especially the water protein composition comprises at least 2 wt.% globular protein. The oleogel is formed after the solvent exchange method. Whereas the macro oleogel is a gel like body, the protein aggregates based oleogel may have a more paste like character.

The aggregation between proteins can be induced by different methods, which are known as pH-induced, solvent-induced and heat-induced aggregation. In yet another embodiment the water protein aggregates are obtainable by the method as defined above for making a hydrogel.

During the solvent exchange process, the water in the hydrogel and/or protein aggregates is exchanged via an intermediate solvent for the oil. Especially, the solvent exchange process is a stepwise exchange process, wherein in exchange steps the water content is gradually decreased and the intermediate solvent is gradually increased, followed by exchange steps wherein the intermediate solvent content is gradually decreased and the oil content is gradually increased.

During a stepwise solvent exchange, the material of interest is transferred from one type of solvent to another. When performing such a solvent exchange with a hydrogel or protein aggregates, the gel or protein aggregates are subsequently immersed into mixtures of solvents for a given time. During the solvent exchange, the solvent composition is changed stepwise into solvents with lower dielectric constants and higher hydrophobicity, creating a potential driving force for swelling or shrinking, since with each step the solvent quality will change, as a result changing the swelling equilibrium.

Hence, in a specific embodiment the solvent exchange process comprises at least a first exchange, wherein the protein composition is exposed to a liquid comprising water and the intermediate solvent, and a second exchange, wherein the protein composition is exposed to a liquid comprising the intermediate solvent and oil.

Further, in yet a more specific embodiment the solvent exchange process comprises in a first stage of the solvent exchange process, a first series of exchanges are executed wherein the protein composition is exposed to a first series of liquids that decrease in water content to a last liquid (in the first series) substantially comprising the intermediate solvent, and subsequently in a second stage of the solvent exchange process, a second series of exchanges are executed wherein the protein composition is exposed to a second series of liquids that decrease in intermediate solvent content to a last liquid (in the second series) substantially comprising the oil.

When using aggregates, each solvent extraction stage, wherein the protein aggregates are mixed with a liquid, may include thorough mixing, including e.g. high shear, such as with a Vortex. Hence, when before a final solvent exchange stage a gel might have been formed, the gel is physically broken down into protein aggregates (for use in a next stage). Further, each stage may include a removal of at least part of the liquid, such as by evaporation and/or a separation method like centrifugation, and optionally a further (re)suspension in a liquid with a higher intermediate solvent content or oil content, respectively.

As intermediate solvent (herein also indicated as "solvent"), any solvent may be used that is at least partly miscible with water and oil. In embodiments, the intermediate solvent comprises one or more solvents selected from the group consisting of acetone, tetrahydrofuran (THF), ethanol, propanol (such as n-propanol), butanol (such as n-butanol), and dimethyl sulfoxide (DMSO). Alternatively or additionally, the solvent may comprise one or more dichloromethane (DCM), ethyl acetate, dimethylformamide (DMF), acetonitrile (MeCN), propylene carbonate, formic acid, isopropanol (IPA), methanol, acetic acid, and nitromethane. Hence, the term intermediate solvent may also refer to a plurality of different intermediate solvents. Note that the composition of the intermediate solvent may optionally differ per exchange step. For instance, in a first exchange the intermediate solvent may only include ethanol and in a next exchange the intermediate solvent may e.g. include a combination of ethanol and acetone.

When the solvent exchange process was used for the hydrogel, good results were obtained with acetone and THF. When the solvent exchange process was used for the protein aggregates, good results were obtained with acetone, THF, ethanol, and 2-butanol. An advantage of using low temperature boiling solvents, such as acetone, is that these solvents may evaporate and may not be present in the final oleogel and/or may be easily removed therefrom.

Hence, the amount of organic intermediate solvent in the final oleogel may be below the detection limit, such as < 0.5 ppm (mg/kg), such as (well) below 0.1 ppm. However, would still some organic solvent be available in the oleogel, the oleogel may comprise the organic intermediate solvent in an amount of 0.5 ppm - 1 wt.%, especially the amount of organic intermediate solvent is less than 0.01 wt.%. Note that these weight percentages relate to the total amount of organic intermediate solvents.

After the solvent exchange process, a substantial amount of the water has been replaced with the oil. The percolating structure of the hydrogel may substantially have been maintained, but the continuous phase has been replaced with the oil. The protein aggregates build together with the oil the oleogel. The oleogel has characteristics like a storage modulus G' (elastic response) being (substantially) larger than a loss modulus G" (viscous behavior).

As indicated above, the invention also provides an oleogel obtainable with the above described method. The oleogel thus obtained may be used in food applications or non-food applications. The gel may be used as such, or may be processed into smaller gel particles. In an embodiment, the invention also provides a food product comprising an oleogel phase as defined herein.

Examples of food products that can be prepared by using the present oleogel include baked goods such as cookies and cakes; spreads such as margarine and chocolate spreads; chocolate and fillings; and meat products, such as a ground meat products such as hamburger meat, or a meat emulsion product such as bologna, mortadella, frankfurters, or other sausage products. In an embodiment of the food product, the oleogel phase is a continuous phase, such as e.g. in the case of a spread. In another embodiment of the food product, the oleogel phase is a discontinuous phase with oleogel regions having one or more dimensions (like length, width, height, and diameter) in the range of up to 10 mm. For instance, this may be the case in meat products. Further applications of the oleogel as described herein may be in low fat spreads (e.g. mouth feel and/or stabilization of emulsion), in meat and fish products (e.g. for texture and/or gelling), desserts or dairy products (e.g. for texture, thickening, gelling), confectionary (e.g. for gelling, texture, chewability, stabilization, binding, etc.). Hence, in an embodiment the food product is selected from the group consisting of a pudding, a mousse, a butter, a processed food product, a, farinaceous food product, etc. As indicated above, in a further embodiment the invention provides a non-food product comprising said oleogel phase. For instance, the product is selected from the group consisting of an animal feed product, a cosmetic product, and a pharmaceutical product, etc.. For instance, the oleogel phase may be used as delivery system for hydrophobic molecules, which may be of interest in cosmetic and/or pharmaceutical applications.

The term "substantially" herein, will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of". The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species". Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The mere fact that certain measures are recited in mutually different dependent claims does not indicate that a combination of these measures cannot be used to advantage.

The various aspects discussed in this patent can be combined in order to provide additional advantages. Furthermore, some of the features can form the basis for one or more divisional applications.

EXPERIMENTAL

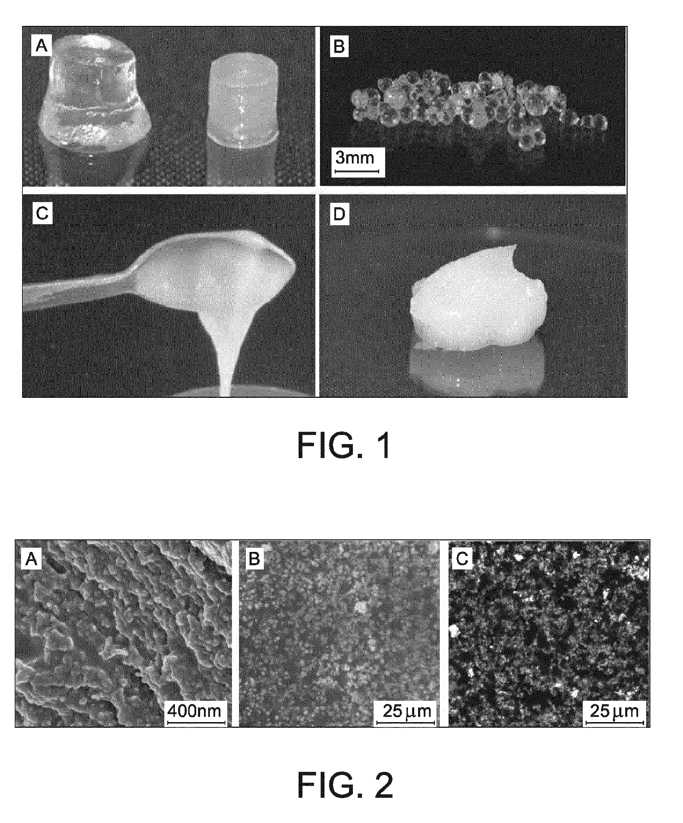

The oleogels can be prepared with different methods and with different starting materials (different volumes of hydrogels). Figure 1 gives an overview of the different oleogels that can be prepared. A gives an example of an oleogel in the range of 1 cm$^3$, B an oleogel in the range of 1 mm$^3$, C a gel paste containing oleogels of roughly 1-1000 $\mu$m$^3$, and D an oleogel prepared from WPI aggregates. The preparation methods will be discussed below in more detail. SEM and CLSM images for the different gels are given in Figure 2. Figure 2A represents an image of a macrogel, 2B represent an image of oleogels with a volume of roughly 1-1000 $\mu$m$^3$, and 2C, a CLSM image of an oleogel paste containing WPI aggregates forming a network.

***Experimental series 1: protein aggregates***

***Protein aggregates examples***

In the current research, a protein in oil suspension is produced using whey protein isolate (WPI) and sunflower oil as a model system.

**Materials and methods**

***Materials***

Whey protein Isolate, BiPRO (93.2%) was purchased from Davisco Foods International, Inc. (le Sueur, MN, USA) and used as received.

Vegetable oils, Sunflower oil (Reddy), Rapeseed oil (Hollands goud), Rice oil (King), Corn oil (Albert Hein), Extra virgin olive oil (Monini) were purchased at a local supermarket and used without further purification.

Demineralized water was used throughout the experiments. All Chemicals, Hydrogen chloride, Acetone, Ethanol, 2-Butanol, Tetrahydrofuran (THF), Cyclohexane, Petroleum benzene were of analytical grade and purchased from Merck (Damstadt, Germany), Sigma-Aldrich (Steinheim, Germany) or Actu-All chemicals (Oss, The Netherlands).

***Methods***

**Protein in oil suspension**

***Production of WPI aggregates***

The WPI aggregates produced in this research were based on the method described by Schmitt et al., Food Hydrocolloids 25 (2011) 558-567. A 4% WPI (powder based) solution (stirred for 2 hours and left overnight to ensure complete solubilisation) was adjusted to pH 5.7 with 1M HCl. This solution was left at room temperature for 20 min while continuously stirring on a magnetic stirrer plate. The pH was corrected again to 5.7 with 1M HCl. After the second pH correction, the samples were heated in a water bath for 15 min at 85°C. The solutions were cooled on ice water. The specific sample composition resulted in the formation of a weak opaque gel, which was broken into small gel fragments by shaking and vortexing for 1 minute.

***Production of protein in oil suspension***

The solvent exchange method can be performed with different types and number of intermediate steps. In this research either 9 steps (long) or 4 steps (short) were used. For the long method, the WPI aggregates were transferred in 9 steps from a protein in water suspension to a protein in oil suspension. First 15 ml of the protein aggregate solution was mixed with 15 ml acetone to obtain a 50% water / 50% acetone solution. This solution was vortexed and subsequently centrifuged (Hermle Z383K, Hermle Labortechnik GmbH, Wehingen, Germany) for 20 min at 6000 rpm (3904xg) at 20°C (all the following centrifugation steps were performed with the same settings). The supernatant was removed, and the pellet was re-suspended in 30 ml 30% water/70% acetone with the use of a high speed blender (Ultra-turrax, T25, IKA Werke, Germany) with a speed of 9500 rpm and centrifuged. This procedure was repeated with pure acetone twice. Then, the pellet was re-suspended in 70% acetone / 30% sunflower oil upon mixing and again centrifuged. This procedure was repeated for 50% acetone/50% sunflower oil, 30% acetone/70% sunflower oil and twice for pure sunflower oil. The last pellet (an opaque gel) was left overnight in the fume hood to evaporate the last traces of acetone. For the short method (4 steps), only pure acetone was used as an intermedate solvent (twice), and the pellet was re-suspended twice in pure oil.

*Intermediate solvents*

Besides acetone, 2-butanol and ethanol were also used as intermediate solvents using the short method. These solvents were not suitable for the long method because of incomplete miscibility with water (2-butanol) or oil (ethanol). Ethanol showed limited solubility in the oil phase, which made it impossible to complete the solvent exchange directly. Instead, the protein in ethanol suspension was mixed with the oil phase with the use of a high speed blender (Ultra-turrax, T25, IKA Werke, Germany) with a speed of 9500 rpm into a suspension. Subsequently, the ethanol was evaporated at room temperature in the fume hood.

*Final solvents*

Besides sunflower oil as final solvent, also rapeseed oil, rice oil, corn oil, and extra virgin olive oil were used to produce the protein in oil suspensions. The short solvent exchange was used, with acetone as an intermediate solvent.

### *Characterisation*

### *Protein content: Dumas*

To calculate the protein content of the samples, a calibration curve was made using 2, 4, 6, 8 and 10 mg of D-methionine as a reference for the nitrogen content. About 50-100 mg of sample was weighed. The samples were dried overnight in an oven at 60°C. The samples were analysed in the dumas (Flash EA 1112 Series, N Analyser, Thermo Scientific). A nitrogen conversion factor of 6.38 was used for WPI to convert the nitrogen content to the protein concentration.

### *Oil content: Soxhlet*

0.4-1 g sample was weighed into a filter extraction tube (Whatman, grade 603, 33x118mm). The filters were covered with cotton wool to prevent leaking of the samples and placed into the extraction tube. The oil was extracted with petroleum benzene between 40 and 60°C. The extraction time was set to 3 hours, which was an indication of three extraction rounds. After cooling down the sample, the petroleum benzene was evaporated with a rotary evaporator (Büchi Rotavapor R-215, Büchi Labortechnik AG, Switzerland) at 60°C with a rotation speed of 125 rpm connected to a vacuum pomp (Büchi vacuum controller v-800, Büchi Labortechnik AG, Switzerland) to decrease the pressure to 200 mbar. The extracted oil of the samples was left overnight in the fume hood and weighed to determine the oil content.

### *Water content: Dry weight* content

To determine the water content, approximately 1 g of protein in oil suspension was weighed into an aluminium cup, and dried in the oven (Venticell, MMM Medcenter Einrichtungen GmbH, Gräfelfing, Germany) for 24 hours at 105°C. After cooling down the samples were weighed. The loss in weight was assumed to be due to evaporation of water.

### *Particle size determination: Mastersizer*

To determine the size of the protein aggregates, the samples were diluted with sunflower oil or water to a protein concentration of 7.5 mg/ml. The samples were mixed with a high speed blender (Ultra-turrax, T25, IKA Werke, Germany) with a speed of 9500 rpm. The particle size distribution of WPI aggregates was determined with the use of a mastersizer (Mastersizer 2000, Malvern Instruments, Worcestershire, UK) after 10 minutes of ultra-sonication with sunflower oil or demi water as the continuous phase. The refractive index of water was set to 1.33 and for sunflower oil to 1.469. The average particle size was defined as the mean of the main primary aggregate peak.

**Structure of protein in oil suspension**

*Confocal laser scanning microscopy (CLSM)*

The difference in structure of protein in oil suspension produced with the short and long solvent exchange method was analysed with the use of confocal laser scanning microscopy (CLSM). The influence of water and heat on the structure of the diluted protein in oil suspension was determined. This was done by 1 to 1 dilution of the protein in oil suspension with oil resulting in a protein content of approximately 4%. To this suspension 0.5% water was added, and this was heated for 15 min at 85°C. Rhodamine (0.2%) in ethanol was used to colour the protein aggregates. The samples were analysed with CLSM (Leica tcs sp5, Leica Microsystems, Wetzlar, Germany).

**Results and discussion**

**Preparation of the WPI aggregates**

Aggregates were prepared with a protein concentration of 4% and a pH of 5.7, which is close to the pI of whey proteins. As a result, a weak opaque gel is formed. Concentrations less than 4% did not lead to large enough aggregates to form a weak gel. For the production of these WPI aggregates, the adjustment of the pH is a critical step. Small differences in the pH resulted in different sizes of the aggregates. If the initial pH prior to heating is around 5.8, a stable WPI aggregate suspension is produced. At an initial pH of 5.7, a weak gel is formed. This weak gel can easily be broken; the small network pieces can form a pellet when centrifuged at 3900xg for 20 minutes. For this reason pH 5.7 is used for the production of the WPI aggregates.

**From WPI aggregates in water to protein in oil suspension**

Results show that simply suspending dried protein in oil is not possible. Also not when the protein is dried from different solvents. The solvent exchange method, in which the proteins always stay in a wet condition, is necessary to obtain the oleogels. A gradual increase of the acetone and oil content was first used, according to the long solvent exchange procedure. To save time, also a short solvent exchange was performed. Both methods seem to result in, visually, similar protein in oil suspensions. A picture of the suspension (the oleogel) can be found in figure 1D.
To investigate the influence of acetone on the process, other solvents were used instead of acetone. 2-Butanol and ethanol were also used to remove the water. For both solvents, the short solvent exchange method was tested. Small differences were found between the different solvents and compared to acetone. Using the solvent exchange procedure, both 2-butanol and ethanol could be used as an intermediate solvent and results in a similar product as when acetone is used as an intermediate solvent. So, it seems that the intermediate solvent is not limited to acetone, and that other solvents also provide the necessary conditions (which could be conformational changes to the protein aggregates or providing sufficient wetting) to be dispersed in an oil continuous phase. In addition to the use of sunflower oil, also other oils (rapeseed oil, rice oil, corn oil, extra virgin olive oil) were suitable to produce a protein in oil suspension. As observed visually, stability and viscosity are comparable to the protein in oil suspension produced with sunflower oil. Therefore, the oleogelation is not specific for a certain type of fatty acid composition, and can be used for different hydrophobic oils and solvents, or other lipid based materials.

**Characterisation**

To characterize the protein in oil suspensions obtained with different methods and solvents, the composition and particle size are determined.

*Composition*

The protein content of the different protein in oil suspensions can be found in Table 1. Depending on the length of the solvent exchange method and the type of intermediate solvent, the protein content is between 7 and 10%. In the case of acetone, the protein content is roughly 8-10%. However, when ethanol or 2-butanol is used as an intermediate solvent, a lower protein content of roughly 7% is found. The differences observed may be a result of the inaccuracy of the last supernatant (oil) removal after centrifugation, leading to dilution of the protein in oil suspension.

**Table 1. Protein and water content of different protein in oil suspensions.**

| Sample | Intermediate solvent | Solvent exchange method | Protein content (%) | Water content (%) |
|---|---|---|---|---|
| 1[3] | Acetone | Long solvent exchange | 8.2 ± 0.8 | 0 |
| 2[3] | Acetone | Short solvent exchange | 10.1 ± 0.7 | 0 |
| 4[1] | Ethanol | Short solvent exchange | 7.4 ± 0.3 | 0.07 ± 0.05 |
| 5[1] | 2-Butanol | Short solvent exchange | 7.3 ± 1.6 | 0 |

[1] indicates that the standard deviation is based on a replicate measurement. [3] indicates that the standard deviation is based on a triplicate measurement.

The method to detemine the water content did not lead to reproducable and trustworthy results. For most of the water content measurements, the mass of the samples increased after drying instead of an expected decrease, probably caused by the absorbance of water by the protein aggregates after heating. Therefore, it is expected that the water content is limited, but no exact values can be given. Also the method for the oil determination did not always lead to satisfactory results. Only the oil content for the protein in oil suspension produced with the use of acetone as an intermediate solvent with the long solvent exchange resulted in a reliable result of 89.8% ± 1.1%, which is an average of a triplicate measurement. These results at least indicate that most of the water was removed from the sample, and replaced by oil. Overall, the use of an intermediate solvent to produce a viscous protein in oil suspension results in a pellet with around 8% protein and 90% oil (figure 1D). The remaining 2% will probably be residues of intermediate solvents, (bound) water or a result of inaccurate analysis.

*Size of the aggregates*

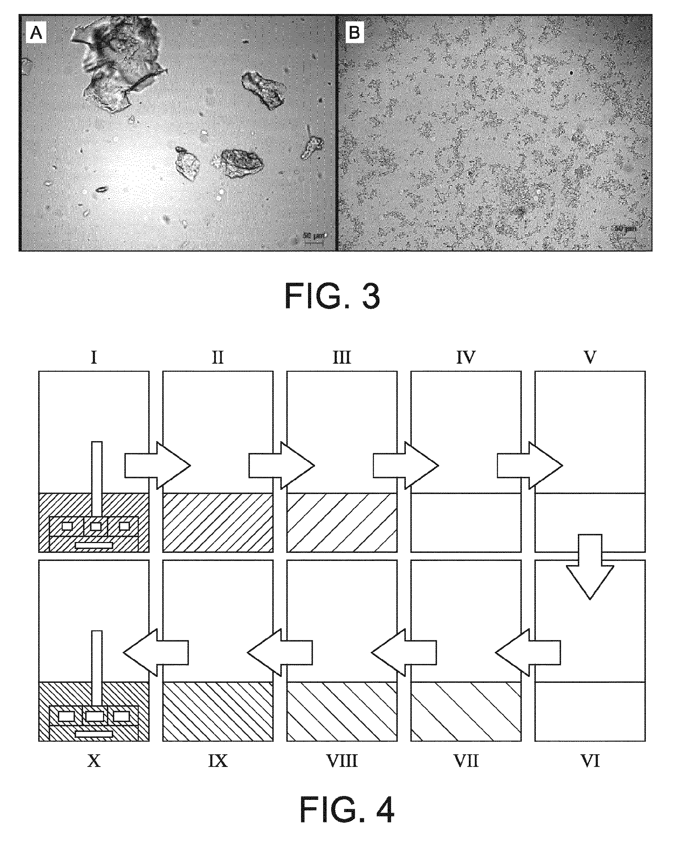

The size of the WPI aggregates was measured with the use of light scattering. The aggregate size of the initial aggregates in water was found to be roughy 210 nm. Some extensive secondary aggregation can be observed in the aqueous phase. In oil, the aggregate size is very similar and no secondary aggregation is present. The average size was found to be 210 ± 30 nm. Due to the solvent exchange, the aggregates fall apart into the primary aggregates. Since the size of the primary aggregates in both the aqueous and oil phase is similar, this indicates that the solvent exchange does not influence the aggregate size. For the WPI aggregates in water, still some larger aggregates are present, which are not observed in the oil phase. Probably the attractive hydrophobic interactions between aggregates in an aqueuous environment are no longer present in a hydrophobic environment. The fact that no hydrophobic interactions can be responsible for aggregate formation in an hydrophobic environment (the oil phase), indicates that the aggregate formation must be dominated by covalent bonds or hydrophilic interactions.
Comparing the short method and the long method with acetone a comparable average size distribution is found. Also the use of another intermediate solvent, such as 2-butanol (2-but) does not influence the aggregate size. To visualize the aggregate formation in oil, the samples were analysed with light microscopy. Figure 3 shows the aggregation for a protein powder (dried from acetone) added to oil (left) and protein in oil suspensions prepared with the solvent exchange (right). The suspension on the left shows larger dense clustering of aggregates. The sample on the right does not show this extensive aggregation. The solvent exchange enables the aggregates to form a more open network. This network is three-dimensional providing the structure to form a gel. Figure 2C shows the network formation in the CLSM image.

*Experimental series 2: Oil binding of macroscopic hydrogels*

*Macro gel*

The following Experimental part especially relates to the macro gel. However, the general principle of solvent exchange also applies to the protein aggregates (see above).

**Solvent exchange**

During a stepwise solvent exchange, the material of interest is transferred from one type of solvent to another. When performing such a solvent exchange with a hydrogel, the gel is subsequently immersed into mixtures of solvents for a given time. This affects swelling behaviour of the hydrogels, as the solvent quality changes with each step. During the solvent exchange, the solvent composition is changed stepwise into solvents with lower dielectric constants and higher hydrophobicity, creating a potential driving force for swelling or shrinking. Table 2 shows solvents with their dielectric constants.

**Table 2: Dielectric constants of solvents used**

| Solvent | dielectric constant |
|---|---|
| Sunflower oil | ~ 3.0 |
| THF | ~ 7.5 |
| Acetone | ~ 21 |
| Water | ~ 80 |

## Material and methods

### Materials

Whey protein isolate (Bipro) was obtained from Davisco international incorporated. Sunflower oil (Reddy, Vandemoortele) was bought at a local supermarket. NaCl was purchased from Sigma Aldrich. Acetone was bought from Actu-All chemicals (801010302) purity (>99%). n-hexane was purchased from Actu-All chemicals (808023502), purity (>99%). THF was bought from Biosolve (20220602/4), purity (>99%). All water used in this research was used in the form of demineralized water. Paraffin oil was purchased from Merck (1.07174.1000). D-Methionine (99% purity) was bought from Sigma Aldrich (227210250).

### Methods

#### Gel preparation

A stock solution of 25% WPI (w/w) (on powder basis) was prepared by stirring WPI powder (Bipro, Davisco international incorporated) and water, for at least 2 hours at ambient temperature. To create WPI hydrogels with different microstructure, the ionic strength of the solution was varied by mixing the stock solution with either water or aqueous solutions and 1M NaCl (Sigma Aldrich) to prepare 15% WPI solutions with 0, 15, 30, 50, 100, 135, 170 or 200 mM NaCl. Obtained solutions were transferred into 5 ml syringes (Omnifix®, B. Braun) (Ø = 1 cm) inner-coated with paraffin oil (Merck, 1.07174.1000), and were closed with a screw-cap (Becton Dickinson Infusion Therapy AB, Sweden). The solutions were then heated in a water bath at 85 °C for 30 min to induce denaturation and accompanying network formation of the WPI. After heating, the samples were left to cool down to 7 °C in the refrigerator and stored at these conditions for a maximum of 24h until analysis or further treatment. The resulting gels were taken out of the syringes and cut into cylindrical slabs (d = 5 mm, h = 5mm), with a gel slicer.

#### Solvent exchange

The solvent exchange was done using a 10 step exchange method following the procedure as visualised in Figure 4. During the exchange, the gel samples were placed in custom build porous (Ø = 1mm) metal holders, with individual chambers ($\pm$1cm$^3$), separated by similar porous membranes. This holder was placed in a 600 or 1000 ml beaker and filled to 150 ml with the exchange solution. At this level the holder including the samples was fully submerged into the solvent. The exchange solutions were continuously stirred with a magnetic stirrer, in order to speed-up the exchange procedure. The beakers were closed by a piece of parafilm or a screw cap, except for the final two steps where the beakers were left open, to allow traces of acetone to evaporate.

Duration of each step in the solvent exchange was at least 7 hours to a maximum of total 65 hours. 7 hours was estimated to be sufficient to achieve a proper solvent exchange within the gels. Both the 100% acetone and 100% oil steps were repeated in order to assure proper water and acetone removal respectively. To investigate the influence of a different intermediate solvent, a similar exchange was performed with Tetra Hydro Furan (THF), in separate 20 ml glass containers with a screw-cap. These were filled with 10 ml of THF and the solution was not stirred. Besides replacing acetone by THF, the remainder of the exchange procedure was kept the same. Before and after the solvent exchange, samples were weighed to determine the efficiency of the exchange. Further analyses was conducted afterwards, samples were stored in oil until they were analysed. Volume of the gels is calculated using composition measurements and using density values of 998 kg/m$^3$ for water, 918 kg/m$^3$ for oil and 1400 kg/m$^3$ for protein. These values are divided by the initial hydrogel volume to obtain the relative volume.

*Moisture content*

The moisture content of the gels was measured according to the method from AOAC, 2000. Samples with known weight were placed on aluminium trays and placed in an oven (Venticell, labo scientific, Ede, The Netherlands) at 105 °C, for three hours. The weight was again recorded and the moisture content was calculated as:

$$\text{Moisture content (\%)} = \frac{W(\text{sample}) - W(\text{sample dry})}{W(\text{sample})} \qquad (1)$$

where W(sample) is the weight of the sample before drying, and W(sample dry) is the weight of the sample after drying. Weight loss is assumed to be due to water evaporation.

*Oil content*

The oil content was determined using a custom exchange method, with n-hexane. First the samples were cut into fine pieces (max $\approx$ 1 mm$^3$), to increase the efficiency of the extraction. The samples were placed into a 20 ml glass container, filled with hexane. The flask was closed with a screw cap and stored for at least 15 hours. The hexane was replaced once, repeating the 15 hours of storage, to insure a proper fat removal. After the second period the sample was collected by filtration and left for one hour to evaporate hexane, after which the fat content was determined using:

$$\text{Fat content (\%)} = \frac{W(\text{sample}) - W(\text{leftover})}{W(\text{sample})} \qquad (2)$$

where W(sample) is the weight of the sample before extraction, and W(leftover) is the weight of the sample after hexane treatment

*Protein content*

The protein content was determined using a DUMAS method. Total Nitrogen content was determined with a Flash EA 1112N/protein analyser (Thermo Scientific, Waltham, US). To calculate the protein content (%w/w), these values were multiplied with a conversion factor of 6.38. A calibration curve was made with methionine.

*Acetone content*

In order to see whether the amount of acetone in the samples was below the GRAS level after evaporation, the amount of acetone was measured. Suspensions with 10% protein in oil were made with protein aggregates prepared at pH 5.7. These were left at room temperature for 48 hours while mildly stirring. After 0, 16, 24, 40 and 48 hours a sample of 10 mL was inserted in a 250 mL Schott bottle. The samples were prepared at least 24h before the measurement to ensure an equilibrium between the sample and the headspace. A calibration curve was prepared with 0, 0.5, 5, 10, 15, 50 and 100 ppm acetone in sunflower oil. The amount of acetone in samples was measured with a mass spectrometer (HR PTR/MS, Ionicon, Innsbruck, Austria) by analyzing the peak at mass 59 and corrected with a blanc.

*Oil binding capacity*

For the different gels, the oil binding capacity was determined by measuring the total weight/volume of the oleogels and comparing this to the weight of the corresponding hydrogel. It is assumed that the oil binding capacity is related to the swelling capacity of the gels, which is domiated by the microstructure of the gels.

*Gel strength*

The gel strength of the gels was determined by measuring the Young's modulus with the use of a texture analyzer (TA Instruments). The Young's modulus was determined from the linear regime of the stress-strain curve.

**Results & Discussion**

The microstructure of the hydrogels was changed by setting the gels at different ionic strength. For samples with a low ionic strength, a fine stranded network is formed, whereas for samples with high ionic strength form a more coarse stranded network. A SEM image of the structure of the network is given in figure 2A. The gel strength, as measured as the Young's modulus increased as the coarseness of the gel increased.

### Oleogel characterization

For the different oleogels, the oil content and the protein content was determined. An example of such an oleogel can be seen in figure 1A. Table 3 shows the results for the different oleogels. From these results, the oil binding capacity (swelling) of the gels is calculated.

**Table 3. Characteristics of some of the oleogels**

| Ionic strength in the gel (mM) | Oil content | Protein content | Oil binding capacity |
|---|---|---|---|
| 0 | 91% | 5.3% | 2.2 |
| 50 | 86% | 9.6% | 1.4 |
| 100 | 83% | 12.9% | 1.1 |
| 200 | 80% | 15.8% | 0.9 |

As expected, the oil binding capacity of the gels is related to the microstructure of the gels as shown in Figure 5. For fine stranded gels (low modulus), a large oil binding capacity is found as the network is more flexible. For coarse stranded gels (high modulus), a lower oil binding capacity is found.

### Acetone and water content characterization

For some of the gels, the amount of acetone and water was determined. The water content for most of the gels was determined to be less than 1% of water. The acetone concentrations as a function of the dryng time is depicted in Figure 6, and shows that roughly 1 ppm acetone remains in the gel.

### Water stability

To test the potential of the gels to act as a fat replacer in aqueous environments, we have tested the water stability of oleogels with a dimension of roughly 1 mm$^3$. The starting hydrogels (as a template for the production of the oleogels) were prepared by gelation of the WPI solution in oil at a temperature of 90°C. The hydrogels were prepared by injecting droplets with a syringe in oil. A fine stranded gel was prepared from a 25% WPI solution and no salt added, while a coarse stranded gel was prepared from a 25% WPI solution containing 200 mM of salt. The hydrogels were subsequently treated with a solvent exchange to replace the water for oil. The resulting oleogels can be seen in Figure 1B. Results show that when the resulting oleogels were placed in aqueous environments, oil is expelled and water is absorbed by the oleogels. This leads to a decrease in the total oil content and an increase in the water content of the gels. Preliminary results show that the ratio water/oil depends on the microstructure of the gel, but in general, the ratio oil/water ranges roughly from 80/20 to 30/70. Table 4 shows results for the two different types of networks. Oil content (based on total weight) was measured using a Soxhlet apparatus, and the water content was estimated.

**Table 4. Oil, protein and water content of oleogels immersed in water**

| | Swelling content | Protein content | Oil content | Water content |
|---|---|---|---|---|
| *Fine network* | | | | |
| 0 mM (NaCl) | 2x | $\pm$ 10 - 25% | $\pm$ 5% | > 70% |
| 200 mM (NaCl) | 2x | $\pm$ 10 - 25% | $\pm$ 10% | > 70% |
| *Coarse network* | | | | |
| 0 mM (NaCl) | 1.3x | $\pm$ 20 - 25% | $\pm$ 40% | $\pm$ 35 - 40% |
| 200 mM (NaCl) | 1.3x | $\pm$ 20 - 25% | > 40% | < 40% |

Hence, a substantial part of the oil remains in the oleogel.

*Experimental series 3: protein type*

As shown before oleogels can be prepared by using whey protein isolate and a solvent exchange procedure. In order to determine the flexibility of the protein source, also pig blood serum proteins are used. In a first experiment, determination of the aggregation and gelling properties of three different protein samples was performed. Furthermore, their usability as oleogelators was determined via: (i) Formation of a heat-set protein gel and exchange internal water content for vegetable oil; (ii) Formation of heat-set protein aggregates and usability as oleogelators (oleogel formers).

*Materials*

Three different protein samples were supplied by Darling international and are derived from pigg blood serum. The composition is given in table 5. All three samples contained serum albumin and serum immunoglobulin, but in different ratio's. Sample "standard" contains both proteins in natural ratio and the sample "Albumin" and "immunoglobulin" are enriched, however still contain both types of protein.

**Table 5: composition of protein samples**

| Sample: | Standard | Albumin | Immunoglobulin |
|---|---|---|---|
| Protein content: | 76.80% | 74.60% | 81.40% |
| Water content: | 7.70% | 4.50% | 4.70% |
| Ash: | 10.70% | 13.60% | 8.30% |

*Methods*

Hydrogel preparation

Protein powders were slowly added to water at 15% w/w. After 2h stirring at room temperature, solutions were left overnight at 4°C to assure complete hydration. To prepare stock solutions, pH was adjusted to 7 or 9 using 1M NaOH or 1M HCl and diluted with water to a final protein concentration of 10% w/w. The gels were prepared at 10% w/w (which was well above the critical gelling concentration) by heating at 85°C for 30 minutes. To perform the solvent exchange, gels were placed in perforated stainless steel baskets and immersed into a series of water-acetone (30, 50, 70 and 100% acetone) and acetone-oil (30, 50, 70 and 100% oil) solutions for 10-12 h per step. The 100% acetone and 100% oil step was performed twice. Demineralized water was used throughout the experiments and protein concentrations were based on true protein content.

**Protein aggregate preparation**

To prepare protein aggregates, the sample 'standard' was used. Aggregates could be prepared at different concentrations depending on the pH of the sample and the type of protein used. The pH of the solutions was adjusted to 6, 7 or 9 using 1M NaOH or 1M HCl. In general, the concentration was roughly 3% for low pH (6) and 5% for high pH (9). Aggregation was initiated by applying heat (85°C) for 30 min. Preparation of the aggregates at the different pH values slighlty changed the microstructure of the aggregates. At pH values closer to the iso-electric point, a more coarse network is formed. For further analysis, the standard sample was used at pH 6 and 3% w/w protein concentration. After cooling, the weak gel was broken down by vortexing (1 min) to create a protein aggregate suspension as a starting material for the solvent exchange. First, the aqueous suspension was centrifuged at 3800 x g for 30 min and the supernatant was discarded. To the pellet 100% acetone was added and the pellet was dispersed by using a rotor-stator homogenizer (Ultra Turrax) at 15.200 rpm for 1 min. Afterwards, the sample was centrifuged at 3800 x g for 20 minutes to collect the pellet. This procedure was repeated once more with 100% acetone and twice with sunflower oil. Afterwards, the protein-in-oil suspension was left to evaporate remaining acetone.

**Results**

*Results solvent exchange on macroscopic hydrogels*

After the solvent exchange, the resulting oleogels did not collapse. Gels at pH 9 are more transparent than at pH 7. The exact oil and water content in the gels was not measured. The amount of oil loading is given in Fig, 7, where

oil loading ($Q_{oil}$) is defined as weight oleogel/weight hydrogel. All protein samples show ability to bind oil into their protein matrix, where the immunoglobulin sample had the highest oil loading capacity.

*Results solvent exchange on protein aggregates*

After the solvent exchange using protein aggregates the pellet was collected. The pellet was a smooth paste-like oleogel containing the protein aggregates. The oleogel was self-supporting. An example of the gel can be found in figure 1D. SEM images show the network formation of the aggregates in Figure 2C.

Figure 8 shows the storage modulus, loss modulus and loss tangent as a function of frequency. As can be seen, the storage modulus was around 60kPa and the loss tangent <0,1, indicating a quite firm gel.

**Claims**

1. A method for the production of an oleogel comprising a protein and an oil, the method comprising:

   (i) providing a water protein composition, wherein the composition comprises protein and water and 0-10 wt.% of one or more other components, and wherein the protein comprises a globular protein;
   (ii) exchanging in a solvent exchange process at least part of the water by a lipid material comprising an oil, wherein an intermediate solvent is applied wherein water is solvable; and
   (iii) providing said oleogel, wherein the oleogel comprises 0.5-30 wt.% of said protein, 70-99.5 wt.% of said oil, and 0-10 wt.% of said one or more other components.

2. The method according to claim 1, wherein the composition comprises 0.5-30 wt.% protein and 70-99.5 wt.% water, wherein the oil is a vegetable oil, and wherein the 0-10 wt.% of one or more other components comprise one or more of a salt, a sugar, a fat, a fatty acid, an amino acid, a vitamin, a gelling agent, and a surfactant.

3. The method according to any one claims 1 and/or 2, wherein the water protein composition comprises a hydrogel, and wherein the water protein composition comprises at least 8 wt.% globular protein.

4. The method according to claim 3, wherein the hydrogel has a volume in the range of 1-1000 $\mu m^3$.

5. The method according to claim 3, wherein the hydrogel has a volume in the range of 1000 $\mu m^3$ - 1 $mm^3$.

6. The method according to claim 3, wherein the hydrogel has a volume larger than 1 $mm^3$, and wherein after the solvent exchange process the thus obtained oleogel is further processed into smaller gel particles.

7. The method according to any one claims 1-2, wherein the water protein composition comprises protein aggregates, and wherein the water protein composition comprises at least 2 wt.% globular protein.

8. The method according to any one of the preceding claims, wherein the globular protein comprises one or more of whey protein, albumin, immunoglobulin, and soy protein, wherein the oil comprises one or more of sunflower oil and canola oil, wherein the intermediate solvent comprises one or more solvents selected from the group consisting of acetone, tetrahydrofuran, ethanol, propanol, butanol, and DMSO.

9. The method according to any one of the preceding claims, wherein in a first stage of the solvent exchange process, a first series of exchanges are executed wherein the protein composition is exposed to a first series of liquids that decrease in water content to a last liquid in the first series substantially comprising the intermediate solvent, and subsequently in a second stage of the solvent exchange process, a second series of exchanges are executed wherein the protein composition is exposed to a second series of liquids that decrease in intermediate solvent content to a last liquid in the second series substantially comprising the oil.

10. An oleogel comprising 0.5-30 wt.% protein, 70-99.5 wt.% lipid material comprising oil, and 0-10 wt.% of one or more other components.

11. The oleogel according to claim 10, wherein the 0-10 wt.% of one or more other components comprise one or more of a salt, a sugar, a fat, a fatty acid, an amino acid, a vitamin, gelling agent, and a surfactant, and wherein the globular protein comprises one or more of whey protein, albumin, immunoglobulin and soy protein, wherein the oil comprises a vegetable oil.

12. The oleogel according to any one of claims 10-11, comprising an organic solvent in an amount of up to 1 wt.% and water in an amount of up to 3 wt.%.

13. A food product or non-food product comprising an oleogel phase according to any one of claims 10-12.

14. The food product according to claim 13, wherein the oleogel phase is a continuous phase.

15. The food product according to claim 13, wherein the oleogel phase is a discontinuous phase with oleogel regions having one or more dimensions in the range of up to 10 mm.

**FIG. 1**

**FIG. 2**

FIG. 3

FIG. 4

FIG. 5

FIG. 6

FIG. 7

FIG. 8

Europäisches
Patentamt

European
Patent Office

Office européen
des brevets

# EUROPEAN SEARCH REPORT

Application Number

EP 14 18 9570

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 836 897 A1 (NESTEC SA [CH]) 26 September 2007 (2007-09-26) | 10-15 | INV. A23D9/00 |
| Y | * paragraph [0001] - paragraph [0021] * * paragraph [0028] - paragraph [0031] * * claims * * figures * | 1-9 | A23L1/05 A23D9/02 A23D9/007 A23L1/0562 |
| X | US 2012/289610 A1 (SAVIN GABRIELA [FR] ET AL) 15 November 2012 (2012-11-15) | 10-15 | |
| A | * paragraph [0001] - paragraph [0043] * * paragraph [0058] - paragraph [0074] * * claims * | 1-9 | |
| X | ASHOK R. PATEL ET AL: "Biopolymer-Based Structuring of Liquid Oil into Soft Solids and Oleogels Using Water-Continuous Emulsions as Templates", LANGMUIR, 22 August 2014 (2014-08-22), XP055161642, ISSN: 0743-7463, DOI: 10.1021/la502829u | 10-15 | |
| A | * page 1, column 1, line 1 - page 4, column 2, line 28 * * page 7, column 2, line 15 - page 7, column 2, line 27 * * figures * | 1-9 | TECHNICAL FIELDS SEARCHED (IPC) A23D A23L |
| X | US 2007/128258 A1 (FAURE MARIE-PIERRE [CA] ET AL) 7 June 2007 (2007-06-07) | 1-15 | |
| Y | * paragraph [0001] - paragraph [0016] * * paragraph [0036] - paragraph [0052] * * paragraph [0057] - paragraph [0099] * * claims 1-16 * | 1-9 | |
| A | GB 690 888 A (DOW CORNING LTD) 29 April 1953 (1953-04-29) * page 1, line 1 - page 2, line 55 * | 1-9 | |

The present search report has been drawn up for all claims

| Place of search | Date of completion of the search | Examiner |
|---|---|---|
| Munich | 22 January 2015 | Alevisopoulos, S |

## ANNEX TO THE EUROPEAN SEARCH REPORT
## ON EUROPEAN PATENT APPLICATION NO.

EP 14 18 9570

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2015

| Patent document cited in search report | | | Publication date | Patent family member(s) | | | Publication date |
|---|---|---|---|---|---|---|---|
| EP 1836897 | A1 | | 26-09-2007 | AT | 447328 | T | 15-11-2009 |
| | | | | AU | 2007228820 | A1 | 27-09-2007 |
| | | | | BR | PI0709048 | A2 | 21-06-2011 |
| | | | | CA | 2645584 | A1 | 27-09-2007 |
| | | | | CN | 101404890 | A | 08-04-2009 |
| | | | | EP | 1836897 | A1 | 26-09-2007 |
| | | | | EP | 1998627 | A1 | 10-12-2008 |
| | | | | ES | 2333179 | T3 | 17-02-2010 |
| | | | | JP | 5107336 | B2 | 26-12-2012 |
| | | | | JP | 2009534016 | A | 24-09-2009 |
| | | | | NZ | 571090 | A | 29-04-2011 |
| | | | | PT | 1998627 | E | 11-02-2010 |
| | | | | RU | 2008141779 | A | 27-04-2010 |
| | | | | UA | 94096 | C2 | 11-04-2011 |
| | | | | US | 2009304896 | A1 | 10-12-2009 |
| | | | | US | 2012189849 | A1 | 26-07-2012 |
| | | | | WO | 2007107490 | A1 | 27-09-2007 |
| US 2012289610 | A1 | | 15-11-2012 | AU | 2011208707 | A1 | 16-08-2012 |
| | | | | CA | 2787545 | A1 | 28-07-2011 |
| | | | | CN | 102834018 | A | 19-12-2012 |
| | | | | EP | 2347658 | A1 | 27-07-2011 |
| | | | | EP | 2525665 | A1 | 28-11-2012 |
| | | | | JP | 2013516995 | A | 16-05-2013 |
| | | | | RU | 2012135483 | A | 27-02-2014 |
| | | | | US | 2012289610 | A1 | 15-11-2012 |
| | | | | WO | 2011089171 | A1 | 28-07-2011 |
| US 2007128258 | A1 | | 07-06-2007 | CA | 2631497 | A1 | 21-06-2007 |
| | | | | EP | 1973525 | A1 | 01-10-2008 |
| | | | | US | 2007128258 | A1 | 07-06-2007 |
| | | | | WO | 2007068086 | A1 | 21-06-2007 |
| GB 690888 | A | | 29-04-1953 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014004018 A

**Non-patent literature cited in the description**

- **SCHMITT et al.** *Food Hydrocolloids,* 2011, vol. 25, 558-567